# EUROPÄISCHE PATENTANMELDUNG

(11) **EP 4 800 673 A1**
(43) Veröffentlichungstag der Anmeldung: **02.09.2026**
(21) Anmeldenummer: 26157173.1
(22) Anmeldetag: 09.02.2026
(51) Int. Cl.: G08G 1/16, B62J 27/00, B62J 33/00, B62J 45/40

(54) **VERFAHREN ZUM INFORMIEREN EINES RADFAHRERS VOR POTENZIELLEN KOLLISIONEN, VERKEHRSVERNETZUNGSEINHEIT FÜR EIN FAHRRAD, UND FAHRRAD**

(30) Priorität: 27.02.2025 DE 102025107398
(71) Anmelder: Canyon Bicycles GmbH, 56073 Koblenz (DE)
(72) Erfinder: Dr. Casas Melo, Victor Fernando, 56068 Koblenz (DE)
(74) Vertreter: dompatent

(57) **Zusammenfassung**

Die Erfindung betrifft ein Verfahren zum Informieren, insbesondere Warnen eines Radfahrers vor potenziellen Kollisionen des Fahrrads (10) des Radfahrers mit anderen Verkehrsteilnehmern, mit den Schritten: Erfassen, insbesondere Empfangen, der Position mindestens eines anderen Verkehrsteilnehmers, Extrapolieren einer Trajektorie mindestens eines anderen Verkehrsteilnehmers anhand der erfassten Position,
- Extrapolieren einer Trajektorie des Fahrrads (10), und Abgeben eines Signals an den Radfahrer, wenn eine anhand der Trajektorien ermittelte Wahrscheinlichkeit einer Kollision zwischen dem Fahrrad (10) und dem mindestens einen anderen Verkehrsteilnehmer einen vordefinierten Risikoschwellenwert überschreitet. Ferner betrifft die Erfindung eine Verkehrsvernetzungseinheit (11) und ein Fahrrad (10).

## Beschreibung

Die Erfindung betrifft ein Verfahren zum Informieren, insbesondere Warnen eines Radfahrers vor potenziellen Kollisionen, eine Verkehrsvernetzungseinheit für ein Fahrrad, ein Fahrrad, sowie ein System zur Datenverarbeitung, ein Computerprogramm und ein computerlesbares Speichermedium.

Im Straßenverkehr kommt es häufig zu gefährlichen Situationen zwischen Fahrradfahrern und anderen Fahrzeugen, insbesondere an unübersichtlichen Kreuzungen, Einmündungen oder durch Sichtbarrieren verdeckten Bereichen. In solchen Situationen haben die Verkehrsteilnehmer keine klare Sicht aufeinander, was das Risiko von Kollisionen erhöht. Fahrradfahrer sind besonders gefährdet, da sie häufig direkt am Straßenverkehr teilnehmen, jedoch keine Knautschzone haben. Sie müssen sich in erster Linie auf das sichtbare Umfeld verlassen, wobei dies in bestimmten Umgebungen jedoch problematisch ist. Beispielsweise können herannahende Fahrzeuge durch Gebäude, Bäume, parkende Fahrzeuge oder andere Hindernisse verdeckt sein, sodass der Radfahrer sie nicht rechtzeitig wahrnimmt.

Aufgabe der Erfindung ist es Radfahrern, bspw. mittels eines Verfahrens und/oder einer Vorrichtung, vor Kollisionen mit anderen Verkehrsteilnehmern zu schützen, insbesondere den Radfahrer vor diesen Kollisionen zu warnen.

Die Lösung der Aufgabe erfolgt erfindungsgemäß durch ein Verfahren zum Informieren und/oder Warnen eines Radfahrers vor potenziellen Kollisionen gemäß Anspruch 1, eine Verkehrsvernetzungseinheit für ein Fahrrad gemäß Anspruch 11, ein Fahrrad gemäß Anspruch 15, sowie ein System zur Datenverarbeitung gemäß Anspruch 8, ein Computerprogramm gemäß Anspruch 9 und ein computerlesbares Speichermedium gemäß Anspruch 10.

Die Erfindung betrifft ein Verfahren zum Informieren, insbesondere Warnen eines Radfahrers vor potenziellen Kollisionen des Fahrrads des Radfahrers mit anderen Verkehrsteilnehmern. Das Verfahren weist den Schritt des Erfassens, insbesondere Empfangens, der Position mindestens eines anderen Verkehrsteilnehmers, insbesondere in der Umgebung des Fahrrads auf. Die Position kann vorzugsweise relativ zum Fahrrad und/oder absolut erfasst werden. Ein weiterer Schritt des Verfahrens besteht im Extrapolieren einer Trajektorie mindestens eines anderen Verkehrsteilnehmers, insbesondere des dem Fahrrad nächsten Verkehrsteilnehmers, anhand der erfassten Position. Beim Erfassen der Position des mindestens einen anderen Verkehrsteilnehmers wird insbesondere eine Positionsänderung des anderen Verkehrsteilnehmers erfasst. Die erfasste Position kann bspw. eine Geschwindigkeit, eine Fahrtrichtung und/oder eine Beschleunigung des anderen Verkehrsteilnehmers umfassen, wobei z. B. ein absoluter Wert davon oder eine Änderung erfasst werden kann. Ein weiterer Schritt des Verfahrens besteht im Extrapolieren einer Trajektorie des Fahrrads, insbesondere mittels einer erfassten Position, vorzugsweise Positionsänderung des Fahrrads. Weitergehend weist das Verfahren den Schritt des Abgebens eines Signals, insbesondere eines Informations- und/oder Warnsignals, an den Radfahrer, wenn die anhand der Trajektorien ermittelte, insbesondere extrapolierte, Wahrscheinlichkeit einer, vorzugsweise seitlichen, Kollision zwischen dem Fahrrad und dem mindestens einen anderen Verkehrsteilnehmer einen vordefinierten Risikoschwellenwert überschreitet. Die Trajektorien werden insbesondere über einen vordefinierten, vorzugsweise zukünftigen, Zeitraum y ermittelt. Vorzugsweise kann ein Überschreiten mehrerer Risikoschwellenwerte, insbesondere eines Informationsschwellwerts z. B. für eine Informationsabgabe an den Radfahrer und eines Warnschwellwerts z. B. für eine Warnung an den Radfahrer.

Es ist bevorzugt, dass die Wahrscheinlichkeit der Kollision ermittelt wird anhand eines vordefinierten Sicherheitsabstands zwischen dem Fahrrad und dem mindestens einen anderen Verkehrsteilnehmer und insbesondere anhand einer zeitlichen und/oder abstandsmäßigen Entfernung bis zum Unterschreiten des Sicherheitsabstands, insbesondere durch das Fahrrad. Der Sicherheitsabstand zwischen Fahrrad und dem mindestens einen anderen Verkehrsteilnehmer ist insbesondere ein Wert, der vordefiniert oder der dynamisch in Abhängigkeit der Geschwindigkeitsvektoren sein kann. Die Anpassung des Wertes kann bspw. anhand der Erfahrung und Sicherheitsgefühlt von dem Radfahrer angepasst werden. Bevorzug betrifft der Sicherheitsabstand einen Abstand zwischen Fahrrad und einem Kollisionspunkt. Dieser Wert kann der normale Anhalteweg für das Fahrrad, bspw. gegeben 1 Sekunden Reaktionszeit, sein. Vorzugsweise wird das Signal, abgegeben, wenn das Fahrrad und der mindestens eine anderen Verkehrsteilnehmer auf Kollisionskurs sind.

Die Trajektorie des Fahrrads und/oder des mindestens einen anderen Verkehrsteilenehmers ist insbesondere eine vorhergesagte Bewegung des Fahrrads bzw. des anderen Verkehrsteilenehmers. Die Trajektorie umfasst dabei insbesondere die künftige Position, vorzugsweise zu der entsprechenden Zeit. Die Trajektorie wird insbesondere anhand der Position, Geschwindigkeit, Beschleunigung und/oder Richtung des Fahrrads bzw. des anderen Verkehrsteilenehmers ermittelt. Ferner kann zur Ermittlung der Trajektorie der Straßenverlauf, erfasste Hindernisse und/oder die Verkehrsinfrastruktur einbezogen werden.

Es ist bevorzugt, dass es sich bei dem Signal um ein haptisches Feedback, vorzugsweise eine Vibration, handelt.

Insbesondere wird das haptische Feedback von dem Fahrrad, bevorzugt dem Lenker des Fahrrads abgegeben. Es ist bevorzugt, dass das haptische Feedback von mindestens einem Griff, und/oder im Griffbereich des Fahrrads abgegeben wird.

Es ist bevorzugt, dass beim Überschreiten des Risikoschwellenwerts durch die Wahrscheinlichkeit einer Kollision zwischen dem Fahrrad und einem sich links von der Trajektorie des Fahrrads befindlichen anderen Verkehrsteilnehmers ein haptisches Feedback von dem linken Griff abgegeben wird. Alternativ oder zusätzlich wird beim Überschreiten des Risikoschwellenwerts durch die Wahrscheinlichkeit einer Kollision zwischen dem Fahrrad und einem sich rechts von der Trajektorie des Fahrrads befindlichen anderen Verkehrsteilnehmers ein haptisches Feedback von dem rechten Griff abgegeben. Bei dem sich links bzw. rechts von der Trajektorie befindlichen Verkehrsteilnehmers handelt es sich insbesondere um einen Verkehrsteilnehmer dessen Trajektorie sich von links bzw. rechts der Trajektorie des Fahrrads nähert, vorzugsweise die Trajektorie des Fahrrads von links bzw. rechts schneidet.

Es ist bevorzugt, dass anhand der Trajektorien mindestens ein Kollisionspunkt POC ("Points of Collision") zwischen dem Fahrrad und dem mindestens einen anderen Verkehrsteilnehmer ermittelt, insbesondere extrapoliert, wird. Bevorzugt wird dieser mindestens eine POC in die ermittelte Wahrscheinlichkeit der Kollision einbezogen. Ein POC ergibt sich insbesondere, wenn der vordefinierte Sicherheitsabstand zwischen dem Fahrrad und dem mindestens einen anderen Verkehrsteilnehmer, vorzugsweise auf den Trajektorien und/oder zu einem Zeitpunkt, unterschritten wird. Das Verfahren umfasst insbesondere den Schritt des Ermittelns, bspw. Berechnens, des mindestens einen POC anhand der Trajektorien von Fahrrad und dem mindestens einen weiteren Verkehrsteilnehmer.

Es ist bevorzugt, dass das Signal an den Radfahrer bei einem Unterschreiten eines ersten vordefinierten Grenzwerts T₁ einer, insbesondere extrapolierten, zeitlichen und/oder abstandsmäßigen Entfernung zu zumindest einem, bevorzugt dem zeitlich und/oder abstandsmäßig nächsten, POC abgegeben wird. Bei diesem abgegebenen Signal handelt es sich insbesondere um ein Informationssignal. Insbesondere wird somit bei Unterschreiten dieses Grenzwerts T₁ ein Überschreiten des Risikoschwellenwerts durch die Wahrscheinlichkeit der Kollision festgestellt.

Es ist bevorzugt, dass bei einem Unterschreiten eines zweiten vordefinierten Grenzwerts T₂ einer, insbesondere extrapolierten, zeitlichen und/oder abstandsmäßigen Entfernung zu zumindest einem, bevorzugt dem zeitlich und/oder abstandsmäßig nächsten, POC ein Signal mit einer höheren Intensität als das Signal beim Unterschreiten des ersten Grenzwerts T₁ an den Radfahrer abgegeben wird. Bei diesem abgegebenen Signal handelt es sich insbesondere um ein Warnsignal, das eine höhere Intensität als das Informationssignal aufweist. Der zweite Grenzwert T₂ ist insbesondere kleiner als der erste Grenzwert T₁, z. B. um zumindest 10 %, bevorzugt um zumindest 20 %, besonders bevorzugt um zumindest 30 %.

Bevorzugt ist es, dass beim Erfassen der Position des mindestens einen anderen Verkehrsteilnehmers, diese Position empfangen wird, vorzugsweise von dem mindestens einen anderen Verkehrsteilnehmer. Es ist bevorzugt, dass das Erfassen der Position des mindestens einen anderen Verkehrsteilnehmers mittels eines V2X-Systems, bevorzugt am Fahrrad, besonders bevorzugt integriert ins Fahrrad, erfolgt. Vorzugsweise wird die Position des mindestens einen anderen Verkehrsteilnehmers mittels des V2X-Systems empfangen.

Es ist bevorzugt, dass das Fahrrad, bevorzugt das V2X-System, die Position, insbesondere die sich ändernde Position, an andere Verkehrsteilnehmer übermittelt. Insbesondere empfängt und/oder sendet das Fahrrad, vorzugsweise mittels des V2X-Systems, CAM (Cooperative Awareness Messages), VAM (VRU awareness message), und/oder ähnliche kooperative Nachrichten. Das Senden und/oder Empfangen erfolgt insbesondere mittels einer, bspw. am Fahrrad angeordneten, V2X-Antenne. Bei der V2X-Antenne handelt es sich bevorzugt um eine Antenne mit zweckgebundener Nahbereichskommunikation (DSRC) Technologie, bspw. gemäß IEEE 802.11 ITS-G5/ ITS-G5 Rel.2, C-V2X/LTE-V2X und/oder 5G-NR V2X. Die V2X-Antenne hat vorzugsweise eine Reichweite von 100 m bis 1000 m, bevorzugt von 300 m bis 600 m. Bei der V2X-Antenne kann es sich bspw. auch um eine für die im Standard definierte Frequenz V2X-Antenne handeln.

Bevorzugt weist das Verfahren den Schritt des Erfassens der Position, insbesondere Positionsänderung, des Fahrrads, bspw. mittels mindestens einer am Fahrrad angeordneten GNSS-Antenne, auf. Anstelle oder zusätzlich zu dem Erfassen der Position des Fahrrads mittels GNSS-Antenne kann die Position des Fahrrads z. B. auch mittels mindestens eines Sensors, bspw. eines Beschleunigungssensors, erfasst werden. Mittels der erfassten Position des Fahrrads erfolgt vorzugsweise das Extrapolieren der Trajektorie des Fahrrads. Die Position des mindestens einen Verkehrsteilnehmers wird vorzugsweise mittels mindestens einer an diesem Verkehrsteilnehmer angebrachten GNSS-Antenne ermittelt. Vorzugsweise werden die Positionen des Fahrrads und/oder des mindestens einen Verkehrsteilnehmers mittels einer standardisierten Nachricht, z.B. CAM und/oder äquivalenter Nachrichtenart übermittelt. Das Verfahren umfasst bevorzugt den Schritt der Prüfung, ob die erfasste Position des Fahrrads älter als eine vorbestimmte Zeit t ist. Bei Feststellung, dass die Position älter als t ist, erfolgt insbesondere die Ermittlung einer neuen Position des Fahrrads. Ferner umfasst das Verfahren insbesondere eine Prüfung, ob innerhalb eines vordefinierten Zeitintervalls q, Positionen mindestens eines anderen Verkehrsteilnehmers erfasst, vorzugsweise empfangen wurden. Bevorzugt umfasst das Verfahren hierbei eine CAM-Warteschlange, auch CAM-Queue genannt. Sofern innerhalb q keine Positionen erfasst wurde, insbesondere keine CAM empfangen wurde, erfolgt vorzugsweise kein Abgeben eines Signals und/oder kein Extrapolieren der Trajektorie des Fahrrads und/oder des mindestens einen anderen Verkehrsteilnehmers.

Die Erfindung betrifft ferner ein System zur Datenverarbeitung, umfassend Mittel zur Ausführung des erfindungsgemäßen Verfahrens.

Die Erfindung betrifft ferner ein Computerprogramm, umfassend Befehle, die bei der Ausführung des Programms durch einen Computer diesen veranlassen, das erfindungsgemäße Verfahren auszuführen.

Die Erfindung betrifft ferner ein computerlesbares Speichermedium, wobei das Speichermedium Befehle umfasst, die bei der Ausführung durch einen Computer diesen veranlassen, das erfindungsgemäße Verfahren auszuführen, und/oder auf dem Speichermedium das erfindungsgemäße Computerprogramm gespeichert ist.

Die Erfindung betrifft ferner eine Verkehrsvernetzungseinheit, insbesondere V2X-Einheit, für ein Fahrrad. Die Verkehrsvernetzungseinheit umfasst ein Kommunikationssystem zur Übermittlung der Position des Fahrrads an andere Verkehrsteilnehmer und zum Empfangen der Position anderer Verkehrsteilnehmer. Ferner umfasst die Verkehrsvernetzungseinheit eine am Fahrrad anzuordnende Feedbackvorrichtung zur Abgabe eines haptischen Feedbacks an den Radfahrer des Fahrrads basierend auf der empfangenen Position. Bei dem abzugebenden Feedback handelt es sich insbesondere um eine Vibration. Die Verkehrsvernetzungseinheit, vorzugsweise eine Steuereinheit der Verkehrsvernetzungseinheit, ist insbesondere eingerichtet das erfindungsgemäße Verfahren auszuführen.

Es ist bevorzugt, dass die Feedbackvorrichtung dazu eingerichtet ist das haptische Feedback über einen Lenker des Fahrrads, insbesondere mindestens einen Griff oder beide Griffe des Lenkers, an den Radfahrer abzugeben. Vorzugsweise ist die Feedbackvorrichtung dazu eingerichtet in den Lenker integriert zu werden, insbesondere im Inneren des Lenkerrohrs angeordnet zu werden.

Es ist bevorzugt, dass die Feedbackvorrichtung dazu eingerichtet ist, unabhängig voneinander ein Feedback über einen rechten und einen linken Griff, und/oder im rechten und linken Bereich des Fahrrads, insbesondere des Lenkers, an den Radfahrer abzugeben. Bspw. kann der Vibrationsaktuator mit einer Endkappe des Griffes verbunden sein. Z. B. kann der Vibrationsaktuator derart an der Endkappe angeordnet sein, dass er gemeinsam mit der Endkappe in den Lenker eingeschoben werden kann. So kann die Endkappe insbesondere als Halterung für den Vibrationsaktuator im Lenker benutzt werden. Alternativ oder zusätzlich kann der Vibrationsaktuator mit einer Klemme des Griffs verbunden sein, insbesondere mit der Klemme integriert ausgeführt sein.

Es ist bevorzugt, dass die Feedbackvorrichtung dazu eingerichtet ist, Feedback in unterschiedlicher Intensität, insbesondere in unterschiedlicher Intensität je Griff, abzugeben.

Es ist bevorzugt, dass die Verkehrsvernetzungseinheit, insbesondere das Kommunikationssystem, eine am Fahrrad anzuordnende Positionsbestimmungsantenne, insbesondere GNSS-Antenne, zur Bestimmung der Position des Fahrrads aufweist; und/oder dass die Verkehrsvernetzungseinheit, insbesondere das Kommunikationssystem, eine am Fahrrad anzuordnende Fahrzeugkommunikationsantenne, insbesondere eine V2X-Antenne, zur Kommunikation mit anderen Verkehrsteilnehmern aufweist.

Es ist bevorzugt, dass die Positionsbestimmungsantenne und/oder die Fahrzeugkommunikationsantenne an einem Steuerrohr des Fahrrad anordenbar ist, insbesondere in das Steuerrohr integrierbar ist.

Die Antennen können insbesondere auf dem Steuerrohr platziert und/oder oder im Steuerrohr, bspw. durch ein Fenster integriert werden. Die V2X-Antenne ist vorzugsweise nach oben frei und/oder oberhalb der GNSS-Antenne positioniert. Somit ist insbesondere umgesetzt, dass die GNSS-Antenne freie Sicht zum Himmel für die GNSS hat und/oder dass die GNSS-Antenne vom Radfahrer nicht verschattet wird. Das Fenster ist insbesondere so konzipiert, dass es die strukturalen Anforderungen des Steuerrohrs erfüllt und/oder zusätzliche Komponenten hinzugefügt werden können. Durch die Anordnung am Steuerrohr ist insbesondere eine stabile Positionierung umgesetzt, da das Steuerrohr nicht so beweglich, wie bspw. Lenker oder Gabel ist. Durch diese Maßnahme wird der Empfang von Signalen aus den Satelliten verbessert, die Fahrrichtung des Fahrrads kann genauer bestimmt werden, und die bevorzugte Nutzung von Beschleunigungssensoren zur Verbesserung der GNSS-Module ist effektiver. Vorzugsweise kann der Winkel der GNSS-Antenne, insbesondere getrennt von der V2X-Antenne, angepasst werden, um die Sicht zum Himmel zu optimieren. Da das Fahrrad meist nach vorne fährt, sind mögliche Gefahren für die Fahrrichtung relevant. Die ausgewählte Position für die V2X Antenne ermöglicht maximale Reichweite und/oder Erfassbarkeit in Fahrrichtung.

Es ist bevorzugt, dass die Verkehrsvernetzungseinheit eine, insbesondere in einen Fahrradrahmen des Fahrrads integrierbare, Steuereinheit, insbesondere ein V2X-Modul, aufweist. Die Steuereinheit weist insbesondere das erfindungsgemäße System zur Datenverarbeitung auf oder besteht daraus. Die Steuereinheit ist insbesondere eingerichtet zur Ermittlung der Trajektorien, Senden und Empfangen von Signalen mittels der Antennen und/oder Steuern der Feedbackvorrichtung.

Die Erfindung umfasst ferner ein Fahrrad mit einer erfindungsgemäßen Verkehrsvernetzungseinheit, insbesondere zum Warnen eines Radfahrers des Fahrrads vor potenziellen Kollisionen mit anderen Verkehrsteilnehmern.

Es ist bevorzugt, dass das Kommunikationssystem in das Fahrrad, insbesondere einen Fahrradrahmen des Fahrrads, integriert ist. Vorzugsweise sind eine, mehrere oder alle Komponenten des Kommunikationssystems, bspw. die Positionsbestimmungsantenne und/oder die Fahrzeugkommunikationsantenne; sowie insbesondere die Steuereinheit in den Fahrradrahmen integriert, z. B. in einem oder mehreren Rahmenrohren, wie dem Oberrohr und/oder dem Unterrohr integriert.

Es ist bevorzugt, dass die Feedbackvorrichtung in den Lenker, und/oder einen oder beide Griffe des Fahrrads integriert ist. Vorzugsweise ist die Feedbackvorrichtung innerhalb des Lenkerrohrs und/oder in einem oder beiden Griffen angeordnet. Die Feedbackvorrichtung weist insbesondere mindestens einen Vibrationsaktuator auf, der vorzugsweise entsprechend integriert ist.

Vor zugsweise ist das Kommunikationssystem, insbesondere die Positionsbestimmungsantenne und/oder die Fahrzeugkommunikationsantenne, an einem Steuerrohr des Fahrrads angeordnet, insbesondere in das Steuerrohr integriert. Vorzugsweise ist die Positionsbestimmungsantenne und/oder die Fahrzeugkommunikationsantenne im Steuerrohr, insbesondere hinter einem, bevorzugt abgedeckten, bspw. verglasten, Fenster des Steuerrohrs angeordnet. Die Steuereinheit, insbesondere das V2X-Modul, ist vorzugsweise in den Fahrradrahmen des Fahrrads integriert. Vorzugsweise ist die Steuereinheit innerhalb eines Fahrradrohrs, bspw. dem Unterrohr oder dem Oberrohr, angeordnet. Die Steuereinheit ist vorzugsweise mit einem Akku, vorzugsweise des Fahrrads, insbesondere in Ausführung des Fahrrads als E-Bike, zur Energieversorgung verbunden. Vorzugsweise weist das geschlossene Unterrohr eine Öffnung, insbesondere lediglich eine Öffnung, für den Einbau eines Akkus auf. Durch die Öffnung wird das V2X-Modul und der Akku in das Unterrohr eingebaut und gesichert. Der Akku kann festverbaut oder abnehmbar, insbesondere mittels Schlosses, sein. Vorzugsweise ist das Oberrohr geschlossen und nur zugänglich durch das Steuerrohr, wenn die Gabel und der Lenker nicht eingebaut sind. Bei bevorzugter Ausführung, bei der das Oberrohr ein Display aufweist, ist es bevorzugt, dass das V2X Modul vor dem Display im Oberrohr integriert wird. Durch diese Maßnahme und/oder generell die Anordnung im Oberrohr ist vorteilhaft umgesetzt, dass die Zugänglichkeit des V2X-Moduls beschränkt ist. Hierdurch ist einer Manipulation, insbesondere einem ungewünschten Eingriff in den Straßenverkehr, vorgebeugt. Das V2X-Modul ist insbesondere mit den Antennen, vorzugsweise durch innenverlegte Kabel, verbunden. Vorzugsweise befinden sich beide Antennen im Steuerrohr. Die GNSS-Antenne ist vorzugsweise unter der V2X-Antenne positioniert, um den Abstand zum Lenker zu verlängern. Dadurch wird die Abschattung vom Lenker auf der GNSS-Antenne reduziert. Das V2X Modul ist vorzugsweise, insbesondere mittels mindestens eines innen-verlegten Kabels, mit der Feedbackvorrichtung verbunden.

Ferner kann die Steuereinheit insbesondere über ein System verfügen, um ihre Anbindung zu einem spezifischen Fahrrad, insbesondere einem spezifischen Fahrradrahmen zu detektieren. Das System kann bspw. einen im Rahmen eingebetteten und/oder verklebten Tag, z.B. NFC-Tag ablesen. Der Tag ist insbesondere ein passives Element mit Informationen zur Identifikation des Fahrrads und/oder des Fahrradrahmens. Die Information ist vorzugsweise verschlüsselt und kann nur von der Steuereinheit abgelesen und entschlüsselt werden. Wird z. B. die Steuereinheit aus dem spezifischen Fahrrad entfernt, sendet sie keine Nachrichten an andere Verkehrsteilnehmer mehr. Dadurch soll gesichert werden, dass das V2X-System, das auf die Präsenz von einem Fahrrad verweist, von anderen Verkehrsteilnehmern als verlässlich wahrgenommen werden kann.

Es ist bevorzugt, dass einer oder mehrere erfindungsgemäße Gegenstände, also das Verfahren, die Verkehrsvernetzungseinheit, das Fahrrad, das System zur Datenverarbeitung, das Computerprogramm und/oder das computerlesbare Speichermedium jeweils eines oder mehrere Merkmale der anderen erfindungsgemäßen Gegenstände aufweisen.

Nachfolgend wird die Erfindung anhand bevorzugter Ausführungsformen unter Bezugnahme auf die anliegenden Zeichnungen näher erläutert.

Es zeigen:
- Fig. 1: ein Flussdiagramm zur Darstellung einer erfindungsgemäßen Ausführungsform eines erfindungsgemäßen Verfahrens,
- Fig. 2: ein Flussdiagramm zur Darstellung eines bevorzugten Teilprozesses in dem Verfahren gemäß Figur 1,
- Fig. 3: eine schematische Darstellung eines Teils einer erfindungsgemäßen Ausführungsform eines Fahrrads mit einer erfindungsgemäßen Ausführungsform einer Verkehrsvernetzungseinheit,
- Fig. 4: ein Teilausschnitt des Steuerrohrs des Fahrrads aus Figur 3 in einer alternativen Ausführung,
- Fig. 5: ein Teilausschnitt des Lenkers aus Figur 3 mit einer bevorzugten, alternativen Ausführung des Vibrationsaktuators, und
- Fig. 6: ein Teilausschnitt des Lenkers aus Figur 3 mit einer weiteren bevorzugten, alternativen Ausführung des Vibrationsaktuators.

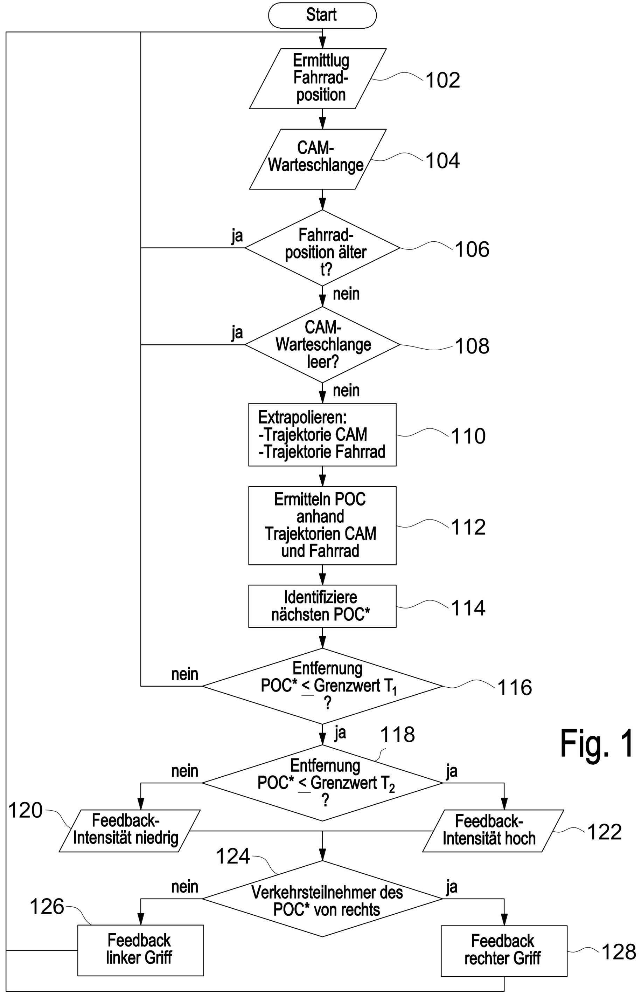

Figur 1 zeigt in einem Flussdiagramm eine erfindungsgemäße Ausführungsform des Verfahrens zum Informieren und/oder Warnen eines Radfahrers vor potenziellen Kollisionen.

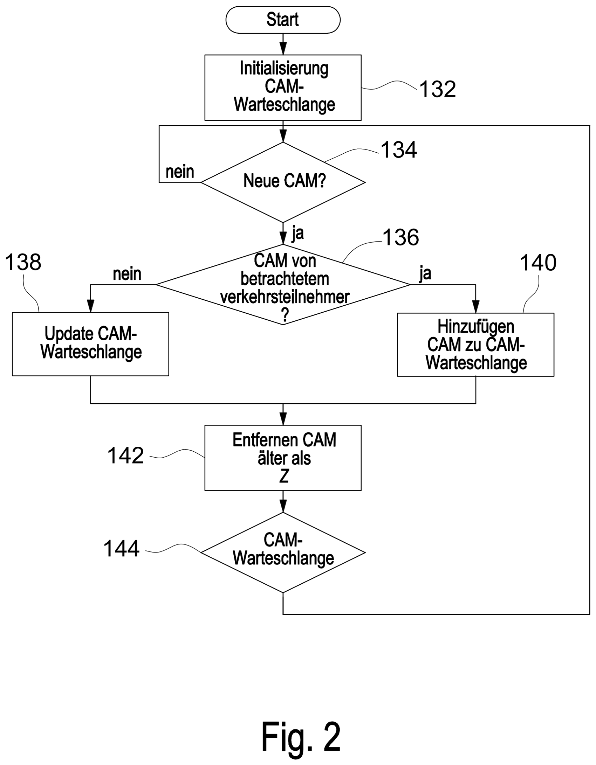

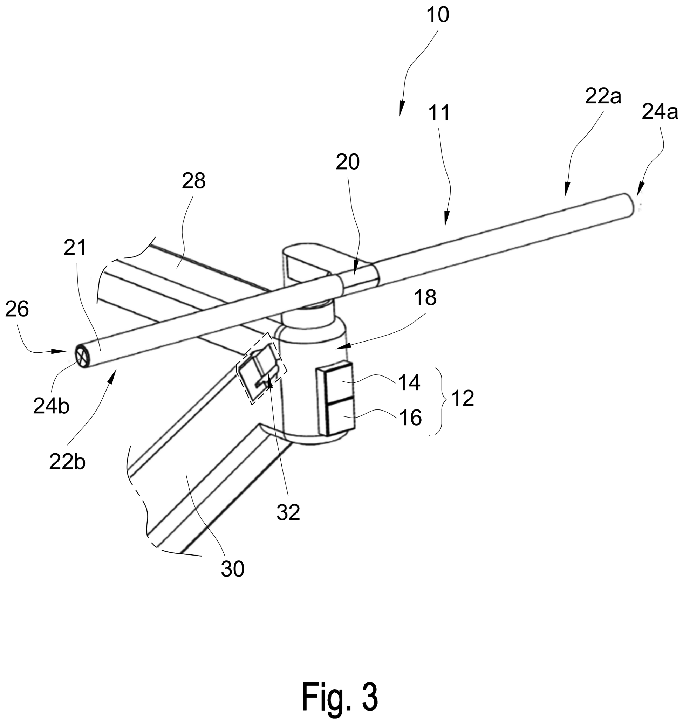

Zunächst erfolgt die Ermittlung der Position des Fahrrads 10 des zu warnenden Radfahrers - Schritt 102. Diese Ermittlung kann bspw. mittels einer am Fahrrad 10 angeordneten GNSS-Antenne 14 (vgl. Fig. 3) erfolgen. Anschließend erfolgt das Empfangen der Position mindestens eines anderen Verkehrsteilnehmers. Hierzu wird eine CAM-Warteschlange ermittelt - Schritt 104. Ein bevorzugtes Vorgehen bei der Ermittlung der CAM-Warteschlange (Schritt 104) ist in Figur 2 dargestellt. Die CAM-Warteschlange enthält Positionsinformationen des mindestens einen anderen Verkehrsteilnehmers, in Form von CAMs (Cooperative Awareness Messages) und/oder äquivalenten Nachrichten, bspw. VAM, DENM, etc. Die CAMs werden insbesondere mittels einer am Fahrrad 10 angeordneten V2X-Antenne 12 (vgl. Fig. 3) empfangen.

Es folgt eine Abfrage, ob die ermittelte Fahrradposition älter als eine vorbestimmte Zeit t ist - Schritt 106. Sofern dies der Fall ist ("ja") wird das Verfahren bei Schritt 102 fortgesetzt. Hierdurch werden insbesondere die Positionsdaten des Fahrrads auf Aktualität und vorzugsweise zusätzlich auf Richtigkeit überprüft.

Sofern die Fahrradposition nicht älter als t ist ("nein"), erfolgt die Abfrage, ob die CAM-Warteschlange leer ist, somit insbesondere keine CAM empfangen wurde und/oder die empfangene CAM aussortiert wurde (vgl. Fig. 2, Schritt 142) - Schritt 108. Sofern die Warteschlange leer ist ("ja"), wird das Verfahren bei Schritt 102 fortgesetzt.

Sollte die Warteschlange nicht leer sein ("nein") erfolgt das Extrapolieren einer Trajektorie des Fahrrads 10 anhand der erfassten Position des Fahrrads und das Extrapolieren einer Trajektorie des mindestens einen anderen Verkehrsteilnehmers anhand der CAM der Warteschlange - Schritt 110. Dieses Extrapolieren erfolgt insbesondere für einen vorbestimmten Zeitraum y.

Anschließend werden anhand der Trajektorien mindestens ein Kollisionspunkt POC ("Points of Collision") zwischen dem Fahrrad 10 und dem mindestens einen anderen Verkehrsteilnehmer ermittelt, insbesondere extrapoliert - Schritt 112. Der zum Fahrrad zeitlich und/oder abstandsmäßig nächste POC* wird identifiziert - Schritt 114.

Es folgt eine Abfrage, ob die zeitliche und/oder abstandsmäßige Entfernung des Fahrrads zum POC* kleiner-gleich einem vordefinierten Grenzwert T₁ ist - Schritt 116. Sofern dies nicht der Falls ist ("nein"), wird geschlossen, dass die Wahrscheinlichkeit einer Kollision nicht gegeben oder ausreichend gering ist. Das Verfahren wird sodann bei Schritt 102 fortgesetzt.

Sollte die zeitliche und/oder abstandsmäßige Entfernung des Fahrrads zum POC* > T₁ sein ("ja"), erfolgt die Abfrage, ob die zeitliche und/oder abstandsmäßige Entfernung des Fahrrads zum POC* kleiner-gleich einem vordefinierten Grenzwert T₂ ist - Schritt 118. Es gilt insbesondere: T₁ < < T₂.

Sofern dies nicht der Fall ist ("nein") wird die Abgabe eines Feedbacks, insbesondere einer Vibration, an den Radfahrer in geringer Intensität festgelegt - Schritt 120. Hierdurch ist insbesondere eine moderate Kollisionswahrscheinlichkeit diagnostiziert, bzw. es handelt sich um eine Information, dass voraussichtlich ein anderer Verkehrsteilnehmer die Trajektorie des Fahrrads schneiden wird. Sofern die zeitliche und/oder abstandsmäßige Entfernung des Fahrrads zum POC* > T₂ ist, wird die Abgabe eines Feedbacks, insbesondere einer Vibration, an den Radfahrer in hoher Intensität festgelegt - Schritt 122. Hierdurch ist insbesondere eine hohe Kollisionswahrscheinlichkeit diagnostiziert. Es gilt vorzugsweise: niedrige Intensität << hoher Intensität.

Es folgt die Abfrage, ob der POC* durch einen sich von rechts nähernden Verkehrsteilnehmer erfolgt, insbesondere ob die Trajektorie des anderen Verkehrsteilnehmers die Trajektorie des Fahrrads von rechts schneidet. Sofern dies der Fall ist ("ja"), wird das entsprechende Feedback in niedriger oder hoher Intensität von dem rechten Griff 22b des Fahrrads 10 (vgl. Fig. 3) abgegeben. Sollte dies nicht der Fall sein ("nein"), wird das entsprechende Feedback von dem linken Griff 22a des Fahrrads 10 abgegeben.

Falls mehrere POC* identifiziert werden, wird insbesondere der zeitlich und/oder abstandsmäßig nächste der POC* genommen und dessen verursachender Verkehrsteilnehmer, um das Feedback zu generieren.

Der Schritt 102 aus Figur 1, also das Ermitteln der CAM-Warteschlange, wird insbesondere durch den bevorzugten Teilprozess gemäß Figur 2 ausgebildet.

Zunächst erfolgt die Initialisierung der CAM-Warteschlange - Schritt 132. Hierbei werden insbesondere CAMs empfangen.

Es folgt die Abfrage, ob mindestens ein neuer CAM empfangen wurde - Schritt 134.

Sofern dies der Fall ist ("ja"), erfolgt die Abfrage, ob diese CAM von dem bereits betrachteten anderen Verkehrsteilnehmer stammt - Schritt 136. Ist dies der Fall ("ja"), wird die CAM zu der CAM-Warteschlange hinzugefügt - Schritt 140. Andernfalls ("nein") erfolgt ein Update der CAM-Warteschlange - Schritt 138.

Im Anschluss werden CAM aus der CAM-Warteschlange entfernt, die älter als ein vordefiniertes Zeitintervall z, insbesondere in Sekunden, ist - Schritt 142. Hierdurch werden insbesondere die CAM-Daten auf Aktualität und vorzugsweise zusätzlich auf Richtigkeit überprüft.

Die hieraus resultierende CAM-Warteschlange (Schritt 144) entspricht insbesondere der CAM-Warteschlange gemäß Schritt 104 aus Figur 1.

Figur 3 zeigt eine bevorzugte erfindungsgemäße Ausführungsform eines Fahrrads 10 mit einer erfindungsgemäßen Ausführungsform einer Verkehrsvernetzungseinheit 11.

Das Fahrrad 10 weist ein Oberrohr 28 und ein Unterrohr 30 auf, die nur teilweise dargestellt sind. Ferner weist das Fahrrad ein mit dem Oberrohr 28 und dem Unterrohr 30 verbundenes Lenkerrohr 18 auf, das einen Lenker 20 aufnimmt.

An dem Steuerrohr 18 ist ein Kommunikationssystem 12 mit einer Positionsbestimmungsantenne 16, insbesondere einer GNSS-Antenne, und einer Fahrzeugkommunikationsantenne 14, insbesondere einer V2X-Antenne, angeordnet. Der Winkel der Positionsbestimmungsantenne 16 ist insbesondere anpassbar.

Innerhalb des Unterrohrs 30 ist eine Steuereinheit 32, die insbesondere ein V2X-Modul aufweist oder daraus besteht angeordnet (zur Darstellung hierzu ist ein Teilschnitt in das Innere des Unterrohrs 30 gezeigt).

Innerhalb des Lenkers 20, insbesondere im Lenkerrohr 21 untergebracht, ist eine Feedbackvorrichtung 26 vorgesehen. Die Feedbackvorrichtung 26 weist je Griffseite 22a, 22b einen Vibrationsaktuator 24a, 24b (schematisch dargestellt) zur Abgabe eines haptischen Feedbacks an den Radfahrer auf. Dargestellt weist der Lenker 20 keine separaten Fahrradgriffe auf. In einer bevorzugten alternativen Ausführungsform kann der Lenker 20 insbesondere einen rechten Griff im rechten Griffbereich 24b und einen linken Griff im linken Griffbereich 24a aufweisen, wobei es sodann bevorzugt ist, dass das haptische Feedback der Vibrationsaktuatoren 24a, 24b über den Lenker 20 und die jeweiligen Griffe an den Radfahrer abgegeben wird.

Vorzugsweise ist die Steuereinheit 32 eingerichtet zur Ermittlung der Trajektorien, zum Senden und Empfangen von Signalen mittels der Antennen 14, 16 und/oder Steuern der Feedbackvorrichtung 26. Es ist bevorzugt, dass die Steuereinheit mittels, insbesondere innenliegenden (nicht dargestellten), Kabeln mit den Antennen 14, 16 und/oder der Feedbackvorrichtung 26 verbunden ist. Die Steuereinheit 32 ist insbesondere eingerichtet zur Ausführung des erfindungsgemäßen Verfahrens, bspw. des Verfahrens gemäß Figur 1, insbesondere ergänzt durch Figur 2.

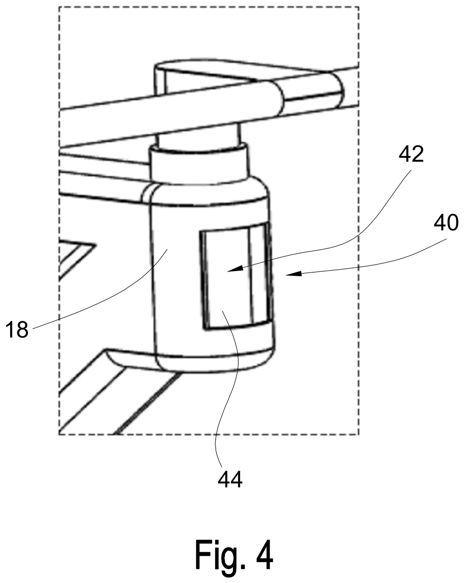

Figur 4 zeigt eine bevorzugte alternative Ausführung des Steuerrohrs 18 gemäß Figur 3. Das Steuerrohr 18 weist hierbei eine Öffnung 40 zum Inneren 42 des Steuerrohrs 18 auf. In der Öffnung 40, also im Inneren 42 des Steuerrohr 18 ist bevorzugt die Positionsbestimmungsantenne 14 und/oder die Fahrzeugkommunikationsantenne 16 angeordnet (nicht dargestellt). Die Öffnung ist vorzugsweise durch ein, bspw. verglastes, Fenster abgedeckt. Anstelle der in Figur 4 dargestellten Ausführungsform ist insbesondere auch eine Ausführung gemäß Figur 4 möglich, bei der die Öffnung 40 nicht vorgesehen ist.

Das Verfahren gemäß Figur 1, insbesondere ergänzt durch Figur 2, wird vorzugsweise mit einem Fahrrad 10 und/oder einer Verkehrsvernetzungseinheit 11 gemäß Figur 3 oder Figur 4 durchgeführt.

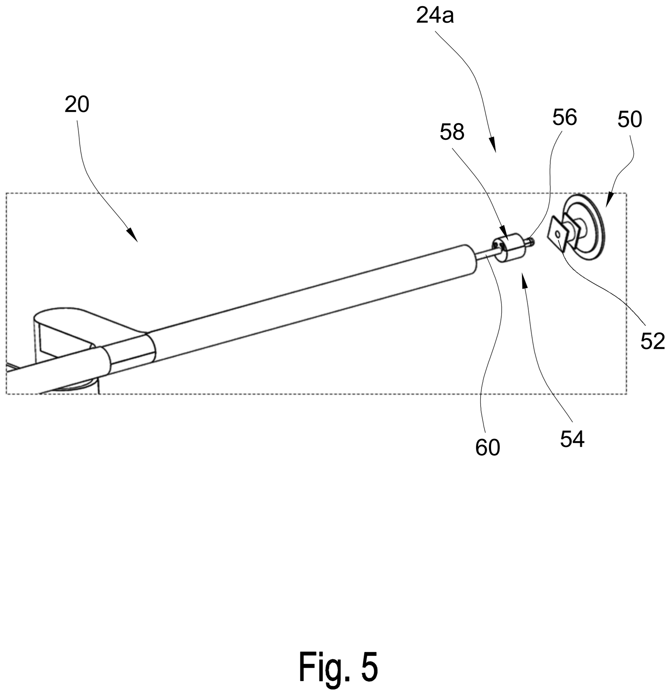

Figur 5 zeigt einen Teilausschnitt (auf die linke Seite) des Fahrradlenkers 20 aus Figur 3 mit einer bevorzugten, alternativen Ausführungsform des Vibrationsaktuators 24a.

Der Vibrationsaktuator 24a weist ein Gehäuse 54 auf, in dem ein Vibrationsmotor 58 (nicht dargestellt) zur Abgabe der Vibration angeordnet ist. Zur Energie- und/oder Datenübertragung ist ein innerhalb des Lenkers 20 geführtes Kabel 60 mit dem Vibrationsaktuator 24a verbunden.

Zur Fixierung sowie insbesondere zur Montage ist mit dem Gehäuse 54 ein Verbindungsstift 56, bspw. einstückig, verbunden. Der Verbindungsstift 56 kann in einer Aufnahme 52 der Abschlusskappe 50 des Lenkers 20 fixierend, insbesondere lösbar fixierend, aufgenommen werden. Somit kann der Vibrationsaktuator 24a innerhalb des Lenkers fixiert angeordnet und gemeinsam mit der Abschlusskappe 50 montiert werden. Die gegenüberliegende rechte Seite des Lenkers 20 weist bevorzugt einen entsprechenden Vibrationsaktuator 24b auf.

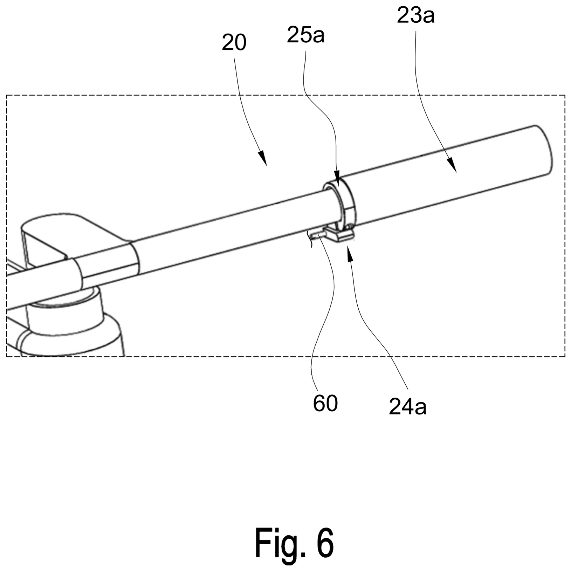

Figur 6 zeigt ebenfalls einen Teilausschnitt (auf die linke Seite) des Fahrradlenkers 20 aus Figur 3 mit einer weiteren bevorzugten, alternativen Ausführungsform des Vibrationsaktuators 24a. Der Vibrationsaktuator 24a ist mit der Griffklemme 25a des linken Griffs 23a verbunden, insbesondere integriert mit der Griffklemme 25a ausgeführt.

## Patentansprüche

1. Verfahren zum Informieren, insbesondere Warnen eines Radfahrers vor potenziellen Kollisionen mit anderen Verkehrsteilnehmern, mit den Schritten:
- Erfassen, insbesondere Empfangen, der Position mindestens eines anderen Verkehrsteilnehmers,
- Extrapolieren einer Trajektorie mindestens eines anderen Verkehrsteilnehmers anhand der erfassten Position,
- Extrapolieren einer Trajektorie des Fahrrads (10), und
- Abgeben eines Signals an den Radfahrer, wenn eine anhand der Trajektorien ermittelte Wahrscheinlichkeit einer Kollision zwischen dem Fahrrad (10) und dem mindestens einen anderen Verkehrsteilnehmer einen vordefinierten Risikoschwellenwert überschreitet.

2. Verfahren nach Anspruch 1, **dadurch gekennzeichnet, dass** es sich bei dem Signal um ein haptisches Feedback handelt.

3. Verfahren nach Anspruch 2, **dadurch gekennzeichnet, dass** das haptische Feedback von mindestens einem Griffbereich des Fahrrads (10) abgegeben wird.

4. Verfahren nach Anspruch 3, **dadurch gekennzeichnet, dass**
- bei Überschreiten des Risikoschwellenwerts durch die Wahrscheinlichkeit einer Kollision zwischen dem Fahrrad (10) und einem sich links von der Trajektorie des Fahrrads (10) befindlichen anderen Verkehrsteilnehmers ein haptisches Feedback von der linken Seite des Lenkers, insbesondere dem linken Griff (22a) abgegeben wird und/oder
- bei Überschreiten des Risikoschwellenwerts durch die Wahrscheinlichkeit einer Kollision zwischen dem Fahrrad (10) und einem sich rechts von der Trajektorie des Fahrrads (10) befindlichen anderen Verkehrsteilnehmers ein haptisches Feedback von der rechten Seite des Lenkers (20), insbesondere dem rechte Griff (22b) abgegeben wird.

5. Verfahren nach einem der Ansprüche 1-4, **dadurch gekennzeichnet, dass** anhand der Trajektorien mindestens ein Kollisionspunkt POC zwischen dem Fahrrad (10) und dem mindestens einen anderen Verkehrsteilnehmer ermittelte wird.

6. Verfahren nach Anspruch 5, **dadurch gekennzeichnet, dass** das Signal an den Radfahrer bei einem Unterschreiten eines ersten vordefinierten Grenzwerts einer zeitlichen und/oder abstandsmäßigen Entfernung zu zumindest einem POC abgegeben wird;
wobei es bevorzugt ist, dass bei einem Unterschreiten eines zweiten vordefinierten Grenzwerts einer zeitlichen und/oder abstandsmäßigen Entfernung zu zumindest einem POC ein Signal mit einer höheren Intensität als das Warnsignal beim Unterschreiten des ersten Grenzwerts an den Radfahrer abgegeben wird.

7. Verfahren nach einem der Ansprüche 1-6, **dadurch gekennzeichnet, dass** das Erfassen der Position des mindestens einen anderen Verkehrsteilnehmers mittels eines V2X-Systems erfolgt.

8. System zur Datenverarbeitung, umfassend Mittel zur Ausführung des Verfahrens nach einem der Ansprüche 1-7.

9. Computerprogramm, umfassend Befehle, die bei der Ausführung des Programms durch einen Computer diesen veranlassen, das Verfahren nach einem der Ansprüche 1-7 auszuführen.

10. Computerlesbares Speichermedium, wobei das Speichermedium Befehle umfasst, die bei der Ausführung durch einen Computer diesen veranlassen, das Verfahren nach einem der Ansprüche 1-7 auszuführen, und/oder auf dem Speichermedium das Computerprogramm nach Anspruch 9 gespeichert ist.

11. Verkehrsvernetzungseinheit (11), insbesondere V2X-Einheit, für ein Fahrrad (10), mit
einem Kommunikationssystem (12) zur Übermittlung der Position des Fahrrads (10) an andere Verkehrsteilnehmer und zum Empfangen der Position anderer Verkehrsteilnehmer,
einer am Fahrrad (10) anzuordnenden Feedbackvorrichtung (26) zur Abgabe eines haptischen Feedbacks an den Radfahrer des Fahrrads (10) basierend auf der empfangenen Position.

12. Verkehrsvernetzungseinheit (11) nach Anspruch 11, **dadurch gekennzeichnet, dass** die Feedbackvorrichtung (26) dazu eingerichtet ist, das haptische Feedback über einen Lenker (20) des Fahrrads (10) an den Radfahrer abzugeben; und/oder
**dadurch gekennzeichnet, dass** die Feedbackvorrichtung (26) dazu eingerichtet, ist unabhängig voneinander ein Feedback über einen rechten und einen linken Griffbereich, insbesondere Griff (22a), des Fahrrads (10) an den Radfahrer abzugeben; und/oder
**dadurch gekennzeichnet, dass** die Feedbackvorrichtung (26) dazu eingerichtet ist, Feedback in unterschiedlicher Intensität abzugeben.

13. Verkehrsvernetzungseinheit (11) nach Anspruch 11 oder 12, **dadurch gekennzeichnet, dass** die Verkehrsvernetzungseinheit (11) eine am Fahrrad (10) anzuordnende Positionsbestimmungsantenne (14), insbesondere GNSS-Antenne, zur Bestimmung der Position des Fahrrads (10) aufweist; und/oder dass die Verkehrsvernetzungseinheit (11) eine am Fahrrad (10) anzuordnende Fahrzeugkommunikationsantenne (16), insbesondere eine V2X-Antenne, zur Kommunikation mit anderen Verkehrsteilnehmern aufweist;
wobei es bevorzugt ist, dass die Positionsbestimmungsantenne (14) und/oder die Fahrzeugkommunikationsantenne (16) an einem Steuerrohr des Fahrrads (10) anordenbar ist, insbesondere in das Steuerrohr integrierbar ist.

14. Verkehrsvernetzungseinheit (11) nach einem der Ansprüche 11-13, **dadurch gekennzeichnet, dass** die Verkehrsvernetzungseinheit (11) eine, insbesondere in einen Fahrradrahmen des Fahrrads (10) integrierbare, Steuereinheit, bspw. ein V2X-Modul, aufweist.

15. Fahrrad (10) mit einer Verkehrsvernetzungseinheit (11) nach einem der Ansprüche 11-14, vorzugsweise **dadurch gekennzeichnet, dass** die Feedbackvorrichtung (26) in einen Lenker (20) und/oder einen oder beide Griffe des Fahrrads (10) integriert ist.
